# FASCICULE DE BREVET EUROPEEN

(11) **EP 0 769 786 B1**
(45) Date de publication et mention de la délivrance du brevet: **29.12.1999**
(21) Numéro de dépôt: 96402175.2
(22) Date de dépôt: 11.10.1996
(51) Int. Cl.: G21C 19/10, G21C 19/16, G21C 3/335

(54) **Perche d'intervention à distance, en particulier dans une piscine de désactivation d'un réacteur nucléaire**
Stange zum ferngesteuerten Eingreifen, insbesondere in einem Zerfallagerbecken eines Kernreaktors
Pole for remote servicing, especially in a spent fuel pit of a nuclear reactor

(30) Priorité: 20.10.1995 FR 9512388
(43) Date de publication de la demande: 23.04.1997
(73) Titulaire: FRAMATOME, 92400 Courbevoie (FR); COGEMA, F-78141 Velizy Villacoublay (FR)
(72) Inventeur: Souchier, Maurice, 69620 Saint Laurent d'Oingt (FR); Bline, Michel, 69210 L'Arbresle (FR); Brin, Michel, 38300 Bourgoin Jallieu (FR)
(74) Mandataire: Bouget, Lucien

(56) Documents cités:
- EP-A- 0 142 382
- EP-A- 0 360 665
- EP-A- 0 518 497
- GB-A- 2 060 238
- DATABASE WPI Week 8842 Derwent Publications Ltd., London, GB; AN 88-295416 XP002000690 & JP 63 214 696 A (TOSHIBA) , 7 Septembre 1988

## Description

L'invention concerne une perche d'intervention à distance en particulier pour effectuer une intervention dans une piscine de désactivation et de réparation d'assemblages de combustible utilisés dans un réacteur nucléaire.

Les réacteurs nucléaires tels que les réacteurs nucléaires à eau sous pression comportent un coeur constitué par des assemblages de combustible, dont il est nécessaire d'effectuer le rechargement périodiquement, pendant des périodes d'arrêt du réacteur nucléaire.

Les assemblages de combustible sortis du coeur du réacteur pendant une opération de rechargement sont généralement placés dans une piscine de désactivation située au voisinage du bâtiment du réacteur.

Des opérations de contrôle et de réparation peuvent être effectuées sur les assemblages de combustible en position de stockage à l'intérieur de la piscine de désactivation.

Les assemblages de combustible comportent une ossature dans laquelle sont placés les crayons de combustible de l'assemblage et qui est fermée à chacune de ses extrémités par un embout.

On connaît des assemblages de combustible ayant au moins un embout démontable permettant d'accéder au faisceau de crayons de combustible disposé dans l'ossature.

Les assemblages de combustible sont placés dans la piscine de désactivation, dans une position verticale à l'intérieur de râteliers de stockage, de telle sorte qu'on puisse accéder à l'embout supérieur de l'assemblage depuis le niveau supérieur de la piscine.

Dans le cas d'assemblages comportant des embouts démontables, il est possible de réaliser le démontage de ces embouts en utilisant une perche qui est manipulée par des opérateurs depuis le niveau supérieur de la piscine de désactivation. Le démontage d'un embout d'un assemblage de combustible peut être réalisé alors que l'assemblage se trouve dans un descenseur monté mobile le long d'une paroi de la piscine.

L'assemblage de combustible est alors disposé sous une hauteur d'eau de quelques mètres (2,5 à 3 mètres), si bien qu'il est nécessaire d'utiliser une perche suspendue à un crochet d'une machine de levage et de manutention qui est actionnée par les opérateurs, pour accéder à l'embout supérieur de l'assemblage de combustible. Un outil d'intervention est fixé à la partie d'extrémité inférieure de la perche, par exemple pour réaliser le démontage de l'embout supérieur de l'assemblage avant une intervention à l'intérieur du faisceau de crayons de combustible de l'assemblage. L'intervention est elle-même effectuée en fixant à l'extrémité de la perche, un outil approprié ou un moyen de contrôle.

Les assemblages de combustible pour réacteurs nucléaires, en particulier pour réacteurs nucléaires refroidis à l'eau comportent une ossature constituée par des plaques-entretoises réparties suivant la longueur de l'assemblage et par des tubes-guides ménagés et éventuellement fixés dans certaines cellules des grilles-entretoises, de manière à constituer un ensemble rigide de maintien des crayons de combustible de l'assemblage qui sont engagés dans les cellules des grilles-entretoises qui ne sont pas occupées par des tubes-guides.

Les deux extrémités de l'ossature sont fermées par des embouts d'extrémité qui sont fixés sur une partie des tubes-guides en saillie par rapport aux crayons de combustible dans la direction longitudinale de l'assemblage de combustible.

En particulier, les assemblages de combustible peuvent comporter un embout supérieur démontable qui est traversé par des ouvertures destinées à recevoir chacune une partie d'extrémité d'un tube-guide et une douille de fixation du tube-guide sur l'embout.

La douille de fixation peut être vissée à l'intérieur d'une partie d'extrémité du tube-guide et bloquée en rotation à l'intérieur de l'embout. Le blocage en rotation de la douille peut être réalisé en déformant des parties d'une virole de la douille à l'intérieur d'embrèvements usinés dans l'embout, au niveau de l'ouverture de traversée dans laquelle sont engagés le tube-guide et la douille de fixation.

Le démontage de la douille, de manière à supprimer la liaison entre le tube-guide et l'embout peut être réalisé par dévissage à distance de la douille, en utilisant une perche d'intervention comportant à son extrémité des parties en saillie venant s'engager dans des parties en creux de la tête de la douille. La perche d'intervention agit alors à la manière d'un tournevis qui peut être actionné depuis le niveau supérieur de la piscine, à une distance de quelques mètres de l'embout supérieur de l'assemblage combustible.

On a également proposé d'utiliser des perches d'intervention qui comportent non seulement un corps de perche dont la partie inférieure peut venir en prise avec la douille pour réaliser son dévissage mais encore une tige de commande disposée axialement à l'intérieur du corps de la perche réalisée sous forme tubulaire, de manière à effectuer une fonction supplémentaire, par exemple la commande d'un outil de maintien de la douille sur la perche, après son dévissage. Un tel outil peut être utilisé aussi bien pour réaliser le démontage de l'embout par dévissage et enlèvement des douilles que le montage de l'embout par mise en place et vissage des douilles de fixation des tubes-guides.

Lorsqu'on a réalisé le dévissage et la prise en charge d'une douille de fixation d'un tube-guide par la perche d'intervention, il est nécessaire de séparer la douille de la perche d'intervention pour pouvoir réutiliser la perche pour une nouvelle opération de dévissage ou éventuellement pour une opération de pose et de revissage d'une douille de fixation. Du fait que les douilles de fixation des assemblages de combustible démontables qui ont séjourné dans le coeur sont fortement contaminées et activées, il est nécessaire de réaliser la séparation de la douille et de la perche de manutention à distance et de déposer la douille contaminée dans un récipient qui peut être disposé dans le fond de la piscine de désactivation du réacteur nucléaire.

Dans certains cas, il peut s'avérer difficile de séparer la douille de la perche d'intervention, même après avoir désactivé le dispositif de maintien de la douille sur la perche d'intervention. Les perches d'intervention connues peuvent donc présenter certains inconvénients quant à leur utilisation pour réaliser des opérations de démontage d'embouts d'assemblages de combustible par dévissage et enlèvement successif de toutes les douilles de fixation de l'embout. Il peut en conséquence être souhaitable de disposer d'un moyen actionné à distance pour réaliser la séparation et l'éjection des douilles démontées et prélevées successivement sur un embout démontable d'assemblage de combustible. Les perches d'intervention connues ne comportent pas de moyen permettant de réaliser et de commander à distance une telle fonction de séparation de la douille.

Dans le EP-A-0.360.665, on a décrit un dispositif de pose d'un manchon de blocage d'un tube-guide dans un embout démontable d'un assemblage de combustible. Le dispositif comporte une perche dont la partie inférieure est munie d'un moyen de retenue élastique du manchon. Par poussée sur la perche, on peut engager le manchon en force, dans une partie d'extrémité déformable du tube-guide. Une tige mobile axialement à l'intérieur de la perche permet d'actionner des griffes qui assurent l'extraction du manchon par traction sur la perche. Un tel dispositif, qui effectue plusieurs fonctions, n'est pas utilisable dans le cas d'une douille de fixation d'un tube-guide vissée dans la partie d'extrémité d'un tube-guide.

Plus généralement, les perches d'intervention connues peuvent s'avérer insuffisantes, dans la mesure où elles ne permettent pas d'effectuer un nombre de fonctions suffisant pour réaliser une opération telle que le démontage et le remontage d'un embout d'assemblage de combustible ou d'autres interventions nécessitant la mise en oeuvre de plus de deux fonctions qui peuvent être commandées à distance.

Le but de l'invention est donc de proposer une perche d'intervention à distance, pour réaliser le démontage et le remontage d'une douille de fixation d'un embout d'assemblage de combustible nucléaire démontable, la douille étant vissée à l'intérieur d'un tube-guide de l'assemblage de combustible, la perche comportant un corps de perche tubulaire et une première tige de commande de forme tubulaire montée coaxialement et mobile en translation axiale à l'intérieur du corps de perche, et pouvant réaliser les opérations complexes en particulier des opérations nécessitant la mise en oeuvre de plus de deux fonctions par commande à distance.

Dans ce but, la perche d'intervention suivant l'invention comporte de plus une seconde tige de commande montée coaxialement à l'intérieur de la première tige de commande et montée mobile en rotation autour de l'axe commun au corps de perche à la première tige de commande et à la seconde tige de commande, à l'intérieur de la première tige de commande. le corps de perche comporte une partie d'extrémité constituant un embout présentant une partie cylindrique dont le diamètre extérieur est inférieur au diamètre intérieur de la douille de fixation de l'embout démontable et au moins une partie en saillie destinée à venir s'engager dans une cavité de la douille, une chemise comportant des doigts flexibles portant des ergots est montée à l'intérieur de l'embout, de manière que les ergots soient situés en vis-à-vis d'ouvertures de passage à travers une paroi de la partie cylindrique de l'embout, la seconde tige de commande comporte une partie constituant un excentrique disposé en contact avec la partie interne des doigts flexibles de la chemise et un ensemble de poussée dans une direction axiale manoeuvrable par la première tige de commande est monté dans l'embout. de manière à présenter au moins une tige de poussée susceptible de se déplacer dans une direction axiale au voisinage de la surface extérieure de la partie cylindrique de l'embout.

Afin de bien faire comprendre l'invention, on a maintenant décrire, à titre d'exemple non limitatif, en se référant aux figures jointes en annexe, un mode de réalisation d'une perche suivant l'invention qui peut être utilisée pour réaliser le démontage et le remontage d'embouts démontables d'assemblages de combustible.

La figure 1 est une vue en élévation schématique d'une perche suivant l'invention.

La figure 2 est une vue en perspective éclatée de la perche suivant l'invention.

La figure 3 est une vue en perspective éclatée et en coupe de la partie supérieure de la perche représentée sur la figure 2.

La figure 4 est une vue en perspective éclatée et en coupe d'une partie intermédiaire de la perche au niveau d'une jonction entre deux tronçons du corps de perche et des tiges de commande.

La figure 5 est une vue en perspective éclatée et en coupe de la partie inférieure de la perche d'intervention représentée sur la figure 2.

La figure 6 est une vue en perspective des parties d'extrémités de deux tronçons d'une tige de commande en position désassemblée.

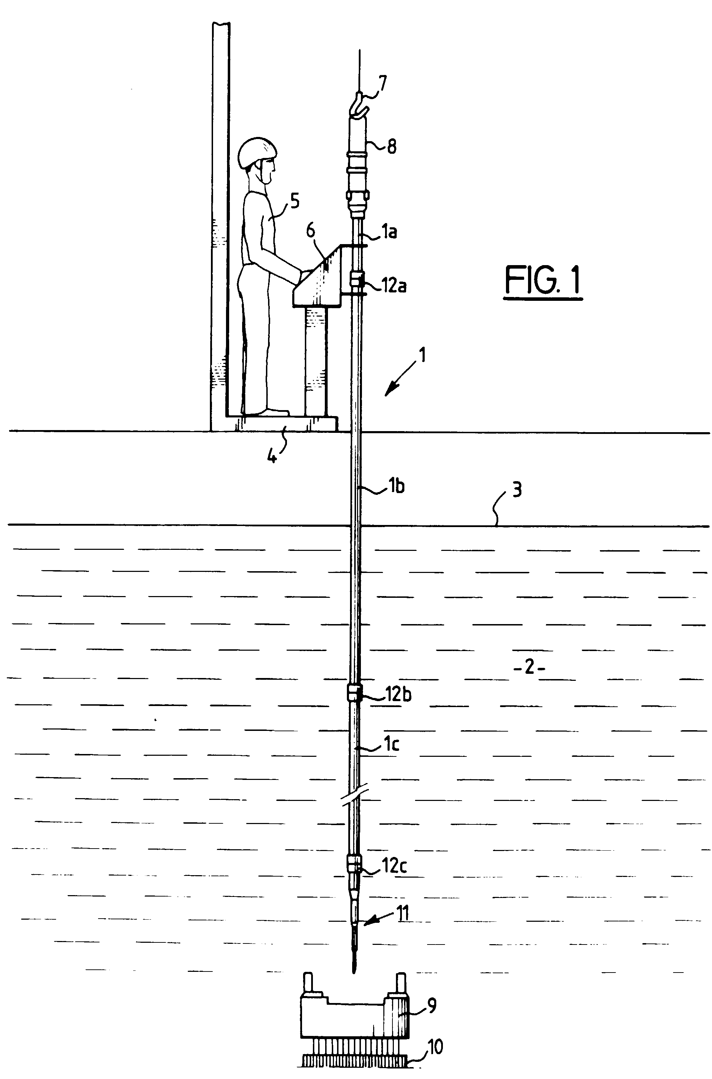

Sur la figure 1 on voit une perche suivant l'invention désignée de manière générale par le repère 1.

La perche a été représentée en position de service dans la piscine 2 d'un réacteur nucléaire rempli d'eau jusqu'au niveau 3.

Au-dessus du niveau supérieur 3 de la piscine, est disposée une plate-forme d'intervention 4 à partir de laquelle des opérateurs tels que 5 peuvent assurer la manipulation de la perche d'intervention 1, par exemple par l'intermédiaire d'un dispositif de maintien et de déplacement 6 qui peut être également utilisé pour effectuer l'assemblage de tronçons de la perche. La perche peut être également manipulée directement par l'opérateur sans utiliser un dispositif de maintien. La perche 1 est fixée par l'intermédiaire d'une anse de manutention 8 à une élingue de sécurité 7 reliée au câble du treuil d'un portique de manutention fixé sur la plate-forme 4.

La piscine 2 est une piscine de stockage et de désactivation d'assemblages de combustible d'un réacteur nucléaire à eau sous pression.

Sur la figure, on a représenté la partie supérieure d'un assemblage de combustible 10 comportant un embout supérieur démontable 9. L'assemblage de combustible 10 présentant la forme d'un parallélépipède rectangle à base carrée est disposé verticalement dans un descenseur de la piscine, de manière que son embout supérieur 9 se trouve à un niveau situé à environ trois mètres en-dessous du niveau supérieur de la piscine 2.

La perche 1 présente une configuration permettant de réaliser la mise en place ou le démontage de douilles de fixation de l'embout supérieur démontable sur la partie d'extrémité de tubes-guides de l'assemblage 10.

Dans cette configuration, la perche d'intervention 1 présente une longueur totale un peu supérieure à cinq mètres et comporte à sa partie inférieure un ensemble de dévissage et de préhension 11 de la douille qui sera décrit plus en détail par la suite. L'ensemble 11 constitue un tournevis et comporte un dispositif de maintien d'une douille de fixation manoeuvrable à distance. De plus, l'ensemble 11 comporte, comme il sera expliqué plus loin, des moyens d'éjection d'une douille engagée sur la partie d'extrémité inférieure de la perche d'intervention comportant l'ensemble 11.

La perche, dans sa configuration représentée, comporte trois éléments modulaires, ou tronçons, 1a, 1b et lc fixés bout à bout dans le prolongement l'un de l'autre, l'élément lc étant relié à sa partie inférieure à l'ensemble d'intervention 11 de la perche qui constitue le tronçon inférieur de la perche d'intervention 1.

Les tronçons 1a, 1b, 1c et 11 sont reliés entre eux par des dispositifs de jonction mécaniques respectifs 12a, 12b et 12c.

Les deux tronçons médians de la perche 1b et 1c ont une longueur voisine de deux mètres.

Le tronçon supérieur la est solidaire d'une anse de manutention 8 de la perche et le tronçon inférieur 11 constituant l'ensemble d'intervention est relié par le dispositif de fixation mécanique 12c à la partie inférieure du tronçon 1c.

Comme il sera expliqué plus loin, les dispositifs de jonction mécaniques tels que 12a, 12b et 12c peuvent être facilement manoeuvrés par l'opérateur 5, au niveau de la plate-forme 4, pour réaliser le montage ou le démontage de tronçons modulaires de la perche et pour adapter sa longueur à l'intervention effectuée sur un assemblage de combustible 10, par exemple en utilisant le dispositif de maintien 6..

Dans sa configuration représentée sur la figure 1, la perche est adaptée à une intervention au niveau de l'embout de l'assemblage combustible. Pour effectuer une intervention dans une zone quelconque suivant la hauteur de l'assemblage combustible, par exemple au niveau d'une grille-entretoise quelconque ou au niveau de l'embout inférieur, on peut réaliser le démontage d'éléments modulaires intermédiaires par exemple entre le tronçon supérieur la et le second tronçon 1b. Le montage et le démontage des tronçons successifs sont effectués en relevant ou en abaissant la perche d'une longueur correspondant à la longueur d'un tronçon. On peut ainsi effectuer toutes les opérations de montage et de démontage depuis la plate-forme 4.

Il est bien entendu que la perche dans sa configuration de service peut comporter un nombre quelconque de tronçons raccordés bout à bout.

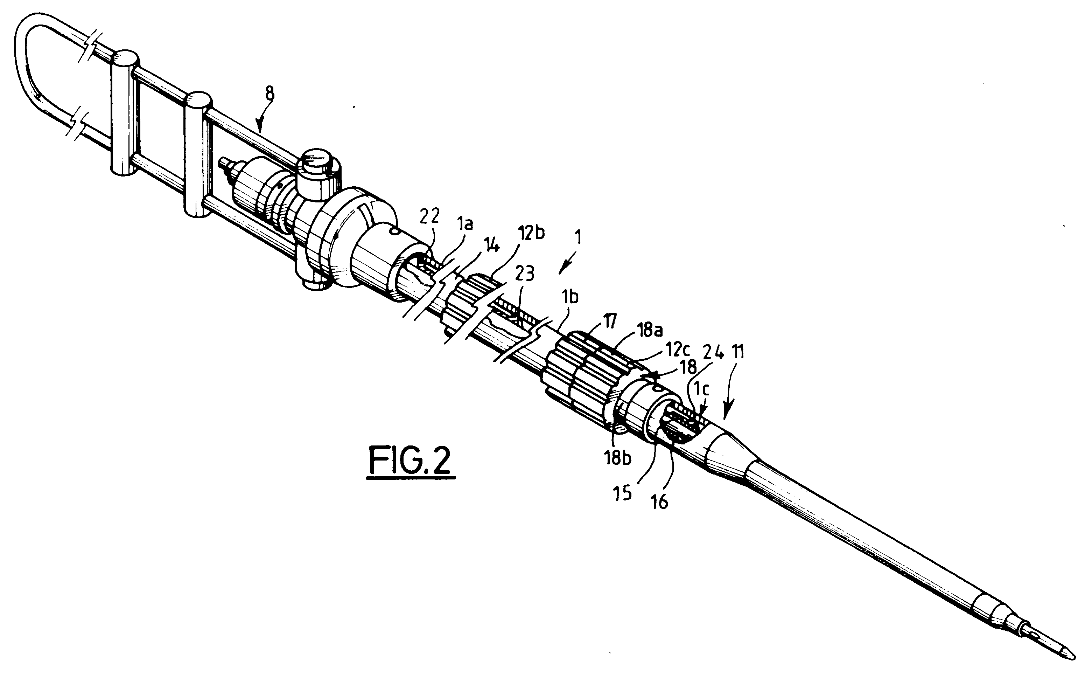

Comme il est visible sur les figures 2 à 5, la perche 1 comporte de manière générale un corps tubulaire 14 constituant la partie externe de la perche, une première tige de commande tubulaire 15 constituant une partie intermédiaire de la perche et une tige de commande centrale 16. Le corps tubulaire 14, la première tige de commande tubulaire 15 et la tige de commande centrale 16 ont une disposition coaxiale, l'axe longitudinal commun aux trois éléments de la perche étant désigné par le repère 13.

Le corps de perche 14 est constitué par des tronçons successifs correspondant chacun à un tronçon de la perche tel que 1a, 1b, 1c et 11, reliés entre eux par les dispositifs de jonction mécanique tels que 12b et 12c.

De préférence, les tronçons du corps de perche sont réalisés en un matériau composite comportant une matière plastique renforcée par un matériau dispersé tel que des fibres. On obtient ainsi un corps de perche ayant à la fois une très bonne résistance mécanique et un faible poids.

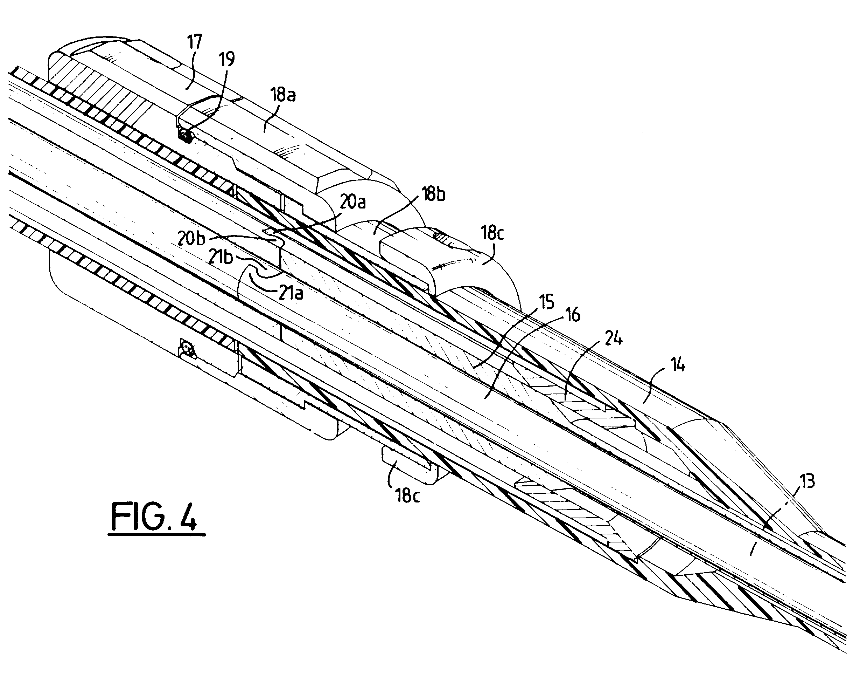

Chacun des dispositifs de liaison de deux tronçons successifs de la perche, tels que 12b et 12c comporte une première pièce de liaison 17 fixée rigidement à l'extrémité d'un tronçon du corps de perche 14 et une seconde pièce de liaison 18 comportant un écrou 18a monté mobile en rotation et maintenu prisonnier dans la direction axiale, sur un corps 18b de la pièce 18 solidaire d'une partie d'extrémité du tronçon du corps de perche 14 à raccorder. L'extrémité de la pièce de liaison 17 comporte une partie filetée sur laquelle vient s'engager par vissage l'écrou 18a de la pièce de liaison 18 pour réaliser l'assemblage de deux tronçons successifs du corps de perche, comme représenté sur la figure 4.

Un joint de caoutchouc 19 intercalé entre la pièce de liaison 17 et l'écrou 18a, lors du vissage de l'écrou 18a permet de réaliser un certain blocage de l'écrou 18a pour éviter son dévissage, notamment lorsque la perche est en service dans la piscine.

L'écrou 18a comporte un talon opposé à sa partie filetée qui est retenu entre un épaulement antérieur de la pièce 18b fixée à l'extrémité du tronçon du corps de perche et une bague 18c également fixée sur le tronçon du corps de perche au-dessus de la partie 18b.

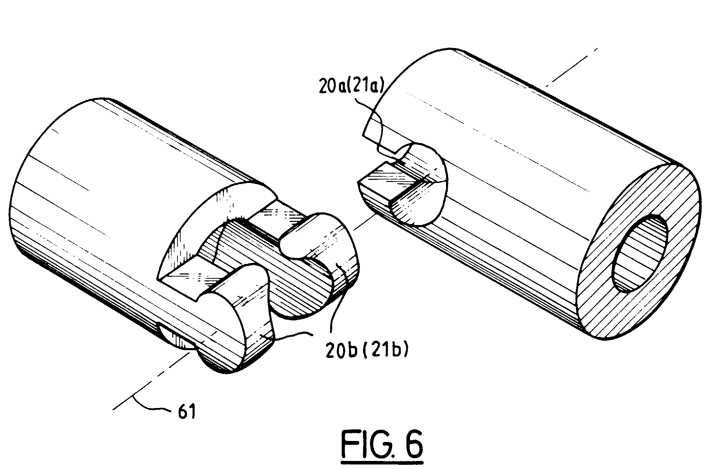

Comme il est visible sur la figure 4 et sur la figure 6, la première tige de commande 15 et la seconde tige de commande 16 sont également constituées de tronçons successifs dont les parties d'extrémité telles que 20a, 20b, en ce qui concerne la tige 15, et 21a, 21b, en ce qui concerne la tige 16, sont profilées de manière à assurer un assemblage des tronçons par engagement des parties 20a, 20b ou 21a, 21b l'une à l'intérieur de l'autre. Les profils d'assemblages sont tels que les tronçons successifs de la première tige de commande 15 et de la seconde tige de commande 16 soient solidaires en rotation autour de l'axe 13 et en translation dans la direction de l'axe 13 commun au corps de perche 14, à la première tige de commande 15 et à la seconde tige de commande 16.

De préférence, la première tige de commande 15 et la seconde tige de commande 16 sont réalisées en un matériau métallique à faible densité tel que l'aluminium. De préférence, la seconde tige de commande 16 est réalisée sous une forme tubulaire.

L'assemblage des tronçons successifs de la première tige de commande 15 doit être réalisé à l'extérieur du corps de perche 14, du fait qu'il est nécessaire d'engager latéralement l'une dans l'autre les parties d'assemblage telles que 20a et 20b des tronçons successifs de la tige de commande 15.

De même, l'assemblage des tronçons successifs de la seconde tige de commande 16 doit être réalisé sur des tronçons disposés de manière telle que leurs parties d'assemblages d'extrémité 21a et 21b soient disposées à l'extérieur de la première tige de commande 15 et à l'extérieur du corps de perche 14.

Sur la figure 6, on a représenté les parties d'extrémité assemblables entre elles de deux tronçons successifs de la tige de commande 15 ou de la tige de commande 16. Les parties d'extrémités 20a et 20b des deux tronçons successifs de la tige 15 (ou 21a et 21b de la tige 16) sont délimitées par des surfaces courbes, constituant la section des tiges cylindriques avec une surface cylindrique ayant un axe 61 perpendiculaire à l'axe des tronçons de tige. Les parties d'extrémité 20a et 21a sont réalisées en creux et les parties d'extrémité 20b et 21b en saillie. L'assemblage des tronçons est réalisé par engagement des parties d'extrémité dans la direction transversale de l'axe 61.

La première tige de commande 15 est montée mobile en translation suivant la direction de l'axe 13 à l'intérieur du corps de perche, par l'intermédiaire de paliers de glissement tels que les paliers 22, 23 et 24 visibles sur la figure 2. Comme il est visible sur la figure 4, le palier 24 est intercalé entre la surface extérieure de la tige 15 et la surface intérieure du corps de perche 14 et maintenu en position dans la direction axiale par mise en appui contre un épaulement prévu sur la surface intérieure du corps de perche 14. Les paliers 22 et 23 sont maintenus d'une manière sensiblement identique et une entretoise de maintien est intercalée entre deux paliers successifs et participe à la rigidité de la liaison 12b.

La seconde tige de commande 16 est engagée glissante et pratiquement sans jeu à l'intérieur de l'alésage de la première tige de commande 15. Les parties d'assemblage des tronçons successifs des tiges de commande 15 et 16 sont parfaitement maintenues, du fait que les tronçons ne disposent pas d'une latitude de déplacement relatif dans la direction transversale, lorsqu'ils sont engagés à l'intérieur du corps de perche ou à l'intérieur de la première tige de commande, respectivement.

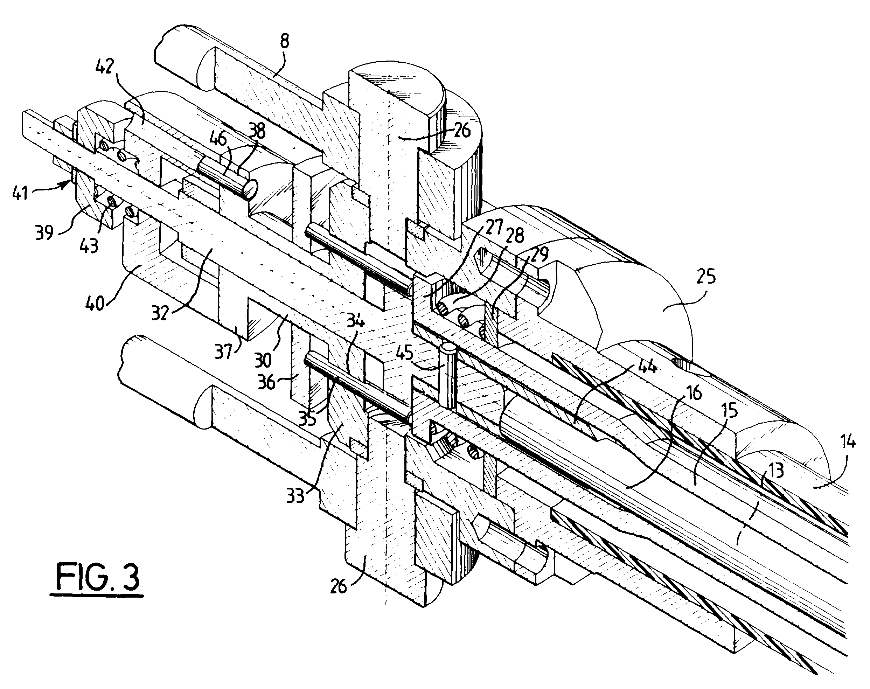

Sur la figure 3, on a représenté l'extrémité du corps de perche 14 reliée à la poignée de manutention 8 ainsi que les extrémités supérieures correspondantes de la première tige de commande 15 et de la seconde tige de commande 16, par l'intermédiaire desquelles les tiges peuvent être actionnées depuis le niveau supérieur de la piscine de désactivation du réacteur.

Sur la partie d'extrémité supérieure du corps 14 est fixée rigidement une pièce de liaison 25 en plusieurs parties qui est traversée par des ouvertures permettant l'assemblage de la poignée 8 et du corps de perche 14, par l'intermédiaire de tourillons 26.

La première tige de commande 15 comporte à son extrémité supérieure une partie 27 en saillie vers l'extérieur constituant un épaulement d'appui pour une première partie d'extrémité d'un ressort hélicoïdal 28 de rappel de la première tige de commande 25, dont la seconde extrémité est en appui sur une partie 29 en saillie radiale vers l'intérieur de la pièce 25 solidaire du corps de perche 14. Le ressort hélicoïdal 28 assure le rappel de la tige de commande 15, en translation dans la direction de l'axe 13 et vers la partie supérieure de la perche de commande.

La pièce 25 solidaire du corps de perche 14 comporte une partie supérieure 30, au-dessus des tourillons 26 assurant le guidage d'une pièce 32 de prolongation et d'actionnement de la seconde tige de commande 16.

De plus, la partie supérieure 30 de la pièce 25 solidaire du corps de perche comporte un flasque 33 traversé par des ouvertures 34 de direction axiale dans chacune desquelles est engagée de manière glissante une tige de poussée 35.

Une plaque de poussée 36 est montée glissante sur une partie cylindrique lisse de la partie supérieure 30 de la pièce 25.

Chacune des tiges de poussée 35 montées glissantes dans une ouverture 34 peut venir en appui par l'une de ses extrémités sur la face inférieure de la plaque de poussée 36 et par son autre extrémité sur l'épaulement 27 de la première tige de commande 15. De cette manière, il est possible d'exercer une poussée sur la première tige de commande 15, à l'encontre de l'action du ressort hélicoïdal de rappel 28, par l'intermédiaire de la plaque de poussée 36, des axes 35 et de l'épaulement 27.

L'actionnement de la première tige de commande 15 par déplacement axial peut être réalisé de manière manuelle par un opérateur depuis la plate-forme de commande, en exerçant une poussée sur la plaque 36 disposée au niveau de la poignée de manutention 8.

Lorsqu on relâche la poussée sur la plaque de poussée 36, le ressort hélicoïdal 28 assure le rappel de la première tige de commande 15 dans la direction axiale et vers le haut.

La partie supérieure 30 de la pièce 25 solidaire du corps de perche 14 comporte un flasque d'extrémité 37 qui est traversé par une ouverture 38.

Sur la partie d'extrémité de la pièce 32 de prolongation et de commande de la seconde tige de commande 16 est montée une pièce de butée 39 venant en appui sur un ensemble de butée 41 solidaire de la pièce 32. Une pièce entretoise 40 traversée par deux ouvertures 42 disposées à 90° l'une de l'autre autour de l'axe 13 est mise en appui par l'intermédiaire d'un ressort hélicoïdal de rappel 43, contre le flasque d'extrémité 37 de la pièce 25. La pièce 40 est montée glissante sur la partie d'extrémité de la pièce de prolongation 32 et solidaire en rotation de la pièce de prolongation 32 de la seconde tige de commande 16, par l'intermédiaire d'une section carrée.

La pièce de prolongation et de commande 32 est solidaire de la seconde tige de commande 16, par l'intermédiaire d'une chemise 44 et d'une goupille 45.

La seconde tige de commande 16 qui est montée glissante dans l'alésage de la première tige de commande 15 et qui est rappelée dans la direction axiale par le ressort 43 peut être déplacée en rotation autour de l'axe 13 à l'intérieur de la première tige de commande 15. La partie supérieure de la pièce de prolongation et de commande 32 comporte à son extrémité une partie profilée par l'intermédiaire de laquelle on peut faire tourner la pièce 32 et la seconde tige de commande 16 autour de l'axe 13. On peut déplacer la seconde tige de commande 16 en rotation autour de l'axe 13, entre une première position dans laquelle l'une des ouvertures 42 de l'entretoise 40 se trouve alignée avec l'ouverture 38 du flasque 37 et une seconde position dans laquelle l'ouverture 42 de l'entretoise 40 est alignée avec l'ouverture 38 du flasque 37. La seconde tige de commande 16 peut être verrouillée dans l'une ou l'autre de ces deux positions par un pion 46 en saillie par rapport à l'ouverture 38 sur lequel on vient engager l'ouverture 42 voulue de la pièce 40 qui peut être soulevée par rapport au flasque 37, avec compression du ressort de rappel 43, puis rappelée dans sa position de verrouillage sur le pion 46. On peut ainsi fixer la tige de commande 16 de manière très précise dans l'une ou l'autre de deux positions entre lesquelles la tige a tourné de 90°.

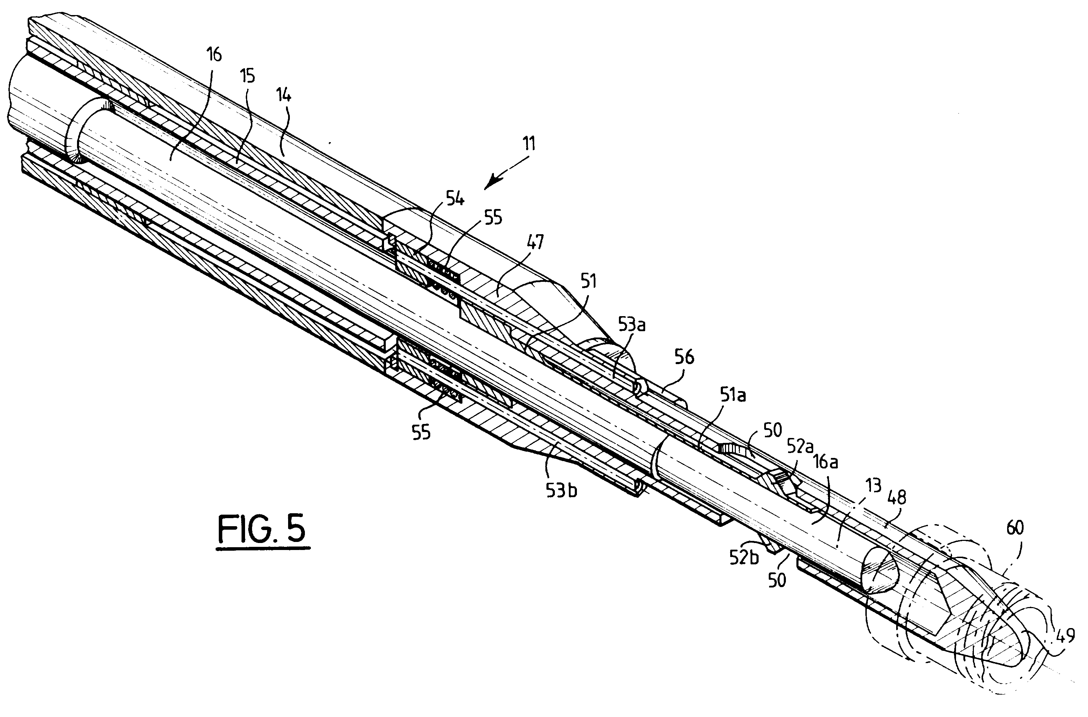

Sur la figure 5, on a représenté l'ensemble d'intervention 11 constituant la partie inférieure de la perche d'intervention 1. Le corps 14 de la perche est solidaire d'un embout 47 comportant une partie cylindrique tubulaire 48 à diamètre réduit terminée à son extrémité qui est fermée, par une pièce d'introduction 49 effilée et arrondie, permettant de faciliter l'engagement de la partie d'extrémité de la perche d'intervention à l'intérieur d'une douille de fixation de l'embout démontable d'un assemblage de combustible. La partie tubulaire 48 à diamètre réduit est traversée par deux lumières 50. Une chemise 51 de forme générale tubulaire est fixée par l'intermédiaire d'un talon, à l'une de ses extrémités, de manière rigide, dans l'alésage intérieur de l'embout 47. La chemise 51 est fendue sur une partie de sa longueur, à partir du talon de fixation, pour constituer deux lames flexibles telles que 51a solidaires à une extrémité d'un ergot tel que 52a susceptible de passer à travers une ouverture 50 de la partie tubulaire 48 de l'embout 47 pour venir en saillie par rapport à la surface extérieure de la partie cylindrique 48.

La seconde lame flexible de la chemise 51 est également solidaire d'un ergot 52b susceptible de traverser la deuxième ouverture 50 de la partie 48 de l'embout pour venir en saillie par rapport à la surface extérieure de la partie cylindrique 48 de l'embout 47.

La seconde tige de commande 16 montée rotative autour de l'axe 13 à l'intérieur de la première tige de commande 15 et du corps de perche 14 comporte une partie d'extrémité 16a dont la surface extérieure n'est pas symétrique de révolution autour de l'axe 13. La partie 16a de la seconde tige de commande 16 constitue un excentrique susceptible de déplacer la partie d'extrémité des lames flexibles de la chemise 51 et les ergots 52a et 52b entre une position de retrait à l'intérieur de la partie 48 de l'embout 47 et une position extraite dans laquelle les parties d'extrémité des ergots 52a et 52b se trouvent en saillie par rapport à la surface extérieure de la partie 48 de l'embout 47. Dans l'une des positions définies plus haut de la seconde tige de commande, les lames de la chemise 51 sont dans une position totalement rétractée alors que dans la seconde position obtenue par une rotation de 90° de la seconde tige de commande 16, les lames de la chemise 51 et les ergots 52a et 52b sont dans une position extraite.

De plus, deux tiges de poussée 53a et 53b solidaires à leurs extrémités d'une bague de poussée 54 sont montées coulissantes dans la direction axiale à l'intérieur de l'embout 47. Des ressorts hélicoïdaux de rappel 55 sont disposés autour des tiges 53a et 53b et intercalés entre la bague de poussée 54 et un épaulement de la surface interne de l'embout 47. Les tiges de poussée 53a et 53b sont engagées dans des ouvertures débouchant à l'extrémité inférieure de l'embout 47 dans une zone adjacente à la surface extérieure de la partie 48 de l'embout 47. Lorsqu'on déplace la première tige de commande 15 dans la direction axiale par poussée manuelle sur la plaque de poussée 36, l'extrémité inférieure de la première tige de commande 15 vient en appui sur l'anneau de poussée 54 et par son intermédiaire assure un déplacement des tiges de poussée 53a et 53b, de manière que les parties d'extrémité des tiges de poussée viennent en saillie à la sortie des ouvertures à la partie inférieure de l'embout 47.

L'embout 47 comporte de plus deux parties 56 en saillie par rapport à la surface extérieure de la partie 48 de l'embout 47 permettant le vissage ou le dévissage de la douille 60. Eventuellement, la tige peut comporter plus de deux parties en saillie ou, au contraire, une seule partie en saillie suivant la forme de réalisation de la douille à dévisser.

La partie 48 cylindrique de l'embout 47 présente un diamètre légèrement inférieur au diamètre intérieur d'une douille de fixation 60 d'un embout démontable d'un assemblage de combustible nucléaire.

Pour réaliser le démontage d'une douille, on introduit depuis le dessus de la piscine de désactivation du réacteur nucléaire, l'extrémité inférieure de la perche d'intervention constituée par la partie 48 de l'embout 47, à l'intérieur de l'alésage de la douille.

Les parties en saillie 56 du corps de perche 14 sont orientées de manière à venir s'introduire dans deux parties en creux de la virole de la douille de fixation. On réalise le déverrouillage de la douille en exerçant un couple sur la douille dans le sens du dévissage, par l'intermédiaire de la poignée de manutention 8 et du corps de perche 14, depuis l'extrémité supérieure de la piscine. Les parties de la virole de la douille serties à l'intérieur de cavités de l'ouverture de l'embout sont déformées de manière qu'on assure le déblocage de la douille. On effectue ensuite le dévissage de la douille en faisant tourner le corps de perche 14 autour de son axe 13, de manière qu'il agisse comme un tournevis pour réaliser le dévissage de la douille. La seconde tige de commande 16 est dans une première position dans laquelle les lames flexibles de la chemise 51 et les ergots 52a et 52b sont dans leur position rétractée. On fait tourner la seconde tige de commande 90° et on fixe sa position depuis la partie supérieure de la perche. Les ergots 52a et 52b venant en saillie par rapport à la surface extérieure de la partie 48 de l'embout 47 assurent une prise de la douille par l'intérieur et un maintien de la douille sur la partie inférieure de l'embout 47. Après que la douille ait été dévissée, il est ainsi possible d'extraire et d'enlever la douille en soulevant la perche d'intervention.

On vient placer la perche au-dessus d'un réceptacle de douilles usagées et on fait tourner la seconde tige de commande, de manière à replacer les doigts et les ergots de la chemise 51 dans une position rétractée. On exerce une poussée sur la plaque de poussée 36, de manière à faire sortir les tiges de poussée 53a et 53b qui viennent en appui sur la partie supérieure de la douille restée engagée sur la partie cylindrique 48 de l'embout 47. On réalise ainsi une éjection de la douille qui tombe dans le réceptacle pour douilles usagées.

Lorsqu'on relâche la pression exercée sur la plaque 36, le ressort 28 rappelle la première tige de commande dans sa position haute, ce qui libère l'anneau de poussée 54. Les ressorts 55 assurent un rappel des tiges de poussée 53a et 53b dans leur position rétractée à l'intérieur de l'embout 47.

La perche d'intervention 1 est alors prête pour réaliser immédiatement le démontage et l'extraction d'une nouvelle douille de fixation de l'embout.

On peut ainsi réaliser très rapidement le démontage de l'embout par des opérations successives commandées depuis la partie supérieure de la piscine.

L'invention ne se limite pas au mode de réalisation qui a été décrit.

C'est ainsi que le corps de perche et la première et la seconde tiges de commande peuvent être réalisés d'une manière différente de celle qui a été décrite.

La réalisation de ces éléments à partir de tronçons raccordables les uns aux autres permet d'intervenir à une profondeur quelconque à l'intérieur de la piscine du réacteur nucléaire, en adaptant la longueur de la perche par montage de tronçons successifs à la position de la zone d'intervention.

Le raccordement des éléments successifs de la première et de la seconde tiges de commande doit être réalisé au niveau de la plate-forme de commande, au-dessus de l'extrémité supérieure du corps de la perche de commande. Le raccordement des tronçons successifs des tiges de commande nécessite un débattement dans une direction transversale. Les éléments de tige de commande peuvent être introduits successivement après leur montage et leur raccordement, à l'intérieur du corps de perche dans leur position de service.

On peut imaginer une perche d'intervention ayant une forme différente de celle qui a été décrite et qui comporte des éléments susceptibles de mettre en oeuvre d'autres fonctions que celles qui ont été décrites.

Par exemple, la première tige de commande peut être utilisée pour mettre en oeuvre un dispositif de sertissage de la douille de fixation d'un tube-guide, par déformation de sa collerette, lors de la pose d'une douille.

D'une manière plus générale, la perche d'intervention suivant l'invention peut être utilisée de manière avantageuse, dans tous les cas où on réalise une intervention commandée à distance mettant en oeuvre plus de deux fonctions qui peuvent être réalisées en utilisant le corps de la perche et des moyens d'actionnement commandés à distance par la première et la seconde tiges de commande.

On peut également envisager l'utilisation de la perche d'intervention suivant l'invention dans un domaine différent du contrôle et de la réparation des assemblages de combustible d'un réacteur nucléaire et dans un cadre différent d'une piscine de désactivation d'un réacteur nucléaire.

## Revendications

1. Perche d'intervention à distance, pour réaliser le démontage et le remontage d'une douille de fixation d'un embout d'assemblage de combustible nucléaire démontable, la douille étant vissée à l'intérieur d'un tube-guide de l'assemblage de combustible, la perche comportant un corps de perche tubulaire (14) et une première tige de commande (15) de forme tubulaire montée coaxialement et mobile en translation axiale à l'intérieur du corps de perche (14), caractérisée par le fait qu'elle comporte de plus une seconde tige de commande (16) montée coaxialement à l'intérieur de la première tige de commande (15) et montée mobile en rotation autour de l'axe (13) commun au corps de perche (14) à la première tige de commande (15) et à la seconde tige de commande (16), à l'intérieur de la première tige de commande (15), que le corps de perche (14) comporte une partie d'extrémité (47) constituant un embout présentant une partie cylindrique (48) dont le diamètre extérieur est inférieur au diamètre intérieur de la douille de fixation de l'embout démontable et au moins une partie (56) en saillie destinée à venir s'engager dans une cavité de la douille, qu'une chemise (51) comportant des doigts flexibles portant des ergots (52a, 52b) est montée à l'intérieur de l'embout (47), de manière que les ergots (52a, 52b) soient situés en vis-à-vis d'ouvertures de passage (50) à travers une paroi de la partie cylindrique (48) de l'embout (47), que la seconde tige de commande (16) comporte une partie constituant un excentrique disposé en contact avec la partie interne des doigts flexibles de la chemise (51) et qu'un ensemble de poussée (54, 53a, 53b) dans une direction axiale manoeuvrable par la première tige de commande (15) est monté dans l'embout (47), de manière à présenter au moins une tige de poussée (53a, 53b) susceptible de se déplacer dans une direction axiale au voisinage de la surface extérieure de la partie cylindrique (48) de l'embout (47).

2. Perche d'intervention suivant la revendication 1, caractérisée par le fait que le corps de perche (14), la première tige de commande (15) et la seconde tige de commande (16) sont constitués par des tronçons successifs dans la direction axiale (13) comportant chacun, à l'une au moins de ses extrémités, un moyen d'assemblage à un autre tronçon.

3. Perche d'intervention suivant la revendication 2, caractérisée par le fait que le corps de perche (14) comporte au moins deux tronçons tubulaires successifs en un matériau composite constitué par une matière plastique et un élément de renforcement et au moins un dispositif d'assemblage mécanique (17, 18) comportant une pièce (17) solidaire d'un premier tronçon ayant une partie filetée et un écrou (18a) susceptible de se visser sur la partie filetée de la pièce de liaison (17) monté mobile en rotation sur une pièce (18b) solidaire d'un second tronçon du corps de perche (14), avec un déplacement limité dans la direction axiale (13).

4. Perche d'intervention suivant la revendication 3, caractérisée par le fait qu'un joint annulaire de caoutchouc (19) est intercalé entre l'écrou (18a) et la pièce de liaison (17) comportant la partie filetée, pour éviter le dévissage de l'écrou (18a) après son vissage sur la partie filetée de la pièce de liaison (17).

5. Perche d'intervention suivant l'une quelconque des revendications 2, 3 et 4, caractérisée par le fait que les tronçons de la première tige de commande (15) et de la seconde tige de commande (16) comportent des parties profilées (20a, 20b, 21a, 21b) de forme correspondante qui peuvent être engagées l'une dans l'autre pour assurer l'assemblage des tronçons. par déplacement relatif dans une direction transversale perpendiculaire à l'axe (13) de la première tige de commande (15) et de la seconde tige de commande (16).

6. Perche d'intervention suivant la revendication 1, caractérisée par le fait que la seconde tige de commande (16) est solidaire en rotation, à son extrémité opposée à l'extrémité constituant l'excentrique (16a), d'un ensemble d'indexage (40, 42, 46) permettant de repérer et de fixer la position en orientation autour de son axe (13), de la seconde tige de commande (16), de manière à pouvoir repérer et fixer une première position dans laquelle l'excentrique (16a) permet un maintien des doigts flexibles de la chemise (51) et des ergots (52a, 52b) dans une position entièrement rétractée à l'intérieur de la partie cylindrique (48) de l'embout (47) et une seconde position en orientation autour de son axe (13) de la seconde tige de commande (16) dans laquelle l'excentrique (16a) assure une extraction des ergots (52a, 52b) des doigts flexibles de la chemise (51) de manière que la partie d'extrémité des ergots (52a, 52b) soit en saillie par rapport à la surface extérieure de la partie cylindrique (48) de l'embout (47).

7. Perche d'intervention suivant la revendication 6, caractérisée par le fait que le dispositif d'indexage (40, 42, 46) de la seconde tige de commande (16) est constitué par une entretoise (40) solidaire en rotation de la seconde tige de commande (16), traversée par deux ouvertures (42) de direction axiale dans des dispositions à 90° autour de l'axe (13) du corps de perche (14), et montée glissante axialement sur une partie d'extrémité d'une pièce (32) solidaire de la seconde tige de commande (16) et par un pion (46) engagé dans une ouverture (38) d'une pièce (37) solidaire du corps de perche (14) en saillie à une extrémité axiale de la pièce (37) en vis-à-vis de l'entretoise (40).

8. Perche d'intervention suivant la revendication 7, caractérisée par le fait que l'entretoise (40) est maintenue en appui contre la pièce (37) solidaire du corps de perche (14), par un ressort hélicoïdal (43) intercalé entre une pièce d'appui (39) solidaire de la seconde tige de commande (16) et l'entretoise (40).

9. Perche d'intervention suivant l'une quelconque des revendications 6 à 8, caractérisée par le fait que la première tige de commande (15) comporte une partie d'extrémité (27) à l'opposé de la partie d'extrémité (47) de la perche, sur laquelle vient en appui un ensemble de poussée manuel (35. 36) monté coulissant dans la direction axiale sur une pièce (25) solidaire du corps de perche (14) et qu'un ressort de rappel (28) de la première tige de commande (15) dans la direction axiale et dans un sens opposé au sens d'actionnement de l'ensemble de poussée (35, 36) est intercalé entre la partie d'extrémité (27) de la première tige de commande (15) et une partie (29) de la pièce (25) solidaire du corps de perche (14).

## Patentansprüche

1. Fernbedienungsstange für die Demontage und Montage einer Befestigungshülse eines Aufsatzes eines zerlegbaren Kernbrennstoffaufbaus, wobei die Hülse im Inneren eines Führungsrohres des Brennstoffaufbaus verschraubt ist und die Stange einen röhrenförmigen Stangenkörper (14) und eine erste röhrenförmige Betätigungsstange (15) aufweist, die koaxial zum Stangenkörper (14) montiert ist und in dessen Innerem in axialer Richtung verschiebbar ist,
dadurch gekennzeichnet, daß
sie ferner eine zweite Betätigungsstange (16) aufweist, die koaxial im Inneren der ersten Betätigungsstange (15) montiert ist und im Inneren der ersten Betätigungsstange (15) um eine gemeinsame Achse (13) des Stangenkörpers (14), der ersten Betätigungsstange (15) und der zweiten Betätigungsstange (16) drehbar montiert ist, daß der Stangenkörper (14) ein äußeres Teil (47), das ein Ansatzstück mit einem zylindrischen Teil (48) darstellt, wobei dessen Außendurchmesser kleiner ist als der Innendurchmesser der Befestigungshülse des zerlegbaren Aufsatzes, und mindestens ein hervorstehendes Teil (56) zum Einführen in eine Ausbuchtung der Hülse aufweist,
daß ein Mantel (51), der flexible Finger mit Vorsprüngen (52a, 52b) aufweist, derart im Inneren des Ansatzstückes (47) montiert ist, daß die Vorsprünge (52a, 52b) gegenüber von Durchgangsöffnungen (50) angeordnet sind, die in einer Wand des zylindrischen Teils (48) des Ansatzstückes (47) eingelassen sind,
daß die zweite Betätigungsstange (16) ein Teil mit einem Exzenter aufweist, der in Kontakt mit dem inneren Teil der flexiblen Finger des Mantels (51) steht und daß eine Schubeinheit (54, 53a, 53b) im Ansatzstück (47) montiert ist und in axialer Richtung durch die erste Betätigungsstange (15) verschiebbar ist, so daß mindestens ein Schubstift (53a, 53b) derart in axialer Richtung verschiebbar ist, daß der Schubstift in die Nähe der Außenfläche des zylindrischen Teils (48) des Ansatzstückes (47) gelangt.

2. Fernbedienungsstange nach Anspruch 1, dadurch gekennzeichnet, daß der Stangenkörper (14), die erste Betätigungsstange (15) und die zweite Betätigungsstange (16) durch in axialer Richtung (13) aufeinanderfolgende Abschnitte gebildet sind, wobei jeder Abschnitt an mindestens einer seiner Enden ein Mittel zum Zusammenbauen an einem anderen Abschnitt aufweist.

3. Fernbedienungsstange nach Anspruch 2, dadurch gekennzeichnet, daß der Stangenkörper (14) mindestens zwei aufeinanderfolgende röhrenförmige Abschnitte als Verbundwerkstoff aufweist, das aus Kunststoff ist und durch ein Verstärkungselement und mindestens eine mechanische Aufbauvorrichtung (17, 18) mit einem Stück (17) gebildet wird, das mit einem ersten Abschnitt mit einem gewindeten Teil und einer Mutter (18a) verbunden ist, die auf das gewindete Teil des Verbindungsstücks (17) aufschraubbar ist, das auf einem Teil (18b) drehbar montiert ist, welches mit einem zweiten Abschnitt des Stangenkörpers (14) mit einer in axialer Richtung (13) begrenzten Verschiebung verbunden ist.

4. Fernbedienungsstange nach Anspruch 3, dadurch gekennzeichnet, daß ein Dichtring aus Kautschuk (19) zwischen der Mutter (18a) und dem Verbindungsstück (17) mit dem gewindeten Teil eingeschoben ist, um das Lösen der Mutter (18a) nach ihrem Aufschrauben auf das gewindete Teil des Verbindungsstücks (17) zu verhindern.

5. Fernbedienungsstange nach mindestens einem der vorherigen Ansprüche 2 bis 4, dadurch gekennzeichnet, daß die Abschnitte der ersten Betätigungsstange (15) und der zweiten Betätigungsstange (16) komplementär geformte, profilierte Teile (20a, 20b, 21a, 21b) aufweisen, die ineinander einführbar sind, um den Zusammenbau der Abschnitte durch eine relative Verschiebung in Querrichtung zu sichern, die senkrecht zur Achse (13) der ersten Betätigungsstange (15) und der zweiten Betätigungsstange (16) ist.

6. Fernbedienungsstange nach Anspruch 1, dadurch gekennzeichnet, daß die zweite Betätigungsstange (16) an ihrem Ende, das dem den Exzenter (16a) aufweisenden Ende gegenüberliegt, drehfest mit einer Markierungseinheit (40, 42, 46) verbunden ist, damit die Ausrichtung um die Achse (13) der zweiten Betätigungsstange (16) auffindbar und fixierbar ist, so daß eine erste Ausrichtung auffindbar und fixierbar ist, in der der Exzenter (16a) eine Befestigung der flexiblen Finger des Mantels (51) und der Vorsprünge (52a, 52b) in eine Lage ermöglicht, die vollständig im Inneren des zylindrischen Teils (48) des Ansatzstückes (47) eingefahren ist und daß eine zweite Ausrichtung um die Achse (13) der zweiten Betätigungsstange (16) auffindbar und fixierbar ist, in der der Exzenter (16a) einen ausgefahrenen Zustand der Vorsprünge (52a, 52b) der flexiblen Finger des Mantels (53) sichert, so daß das äußerste Teil der Vorsprünge (52a, 52b) gegenüber der Außenfläche des zylindrischen Teils (48) des Ansatzstücks (47) herausragt.

7. Fernbedienungsstange nach Anspruch 6, dadurch gekennzeichnet, daß die Markierungsvorrichtung (40, 42, 46) der zweiten Betätigungsstange (16) durch ein Zwischenstück (40) gebildet ist, welches drehfest mit der zweiten Betätigungsstange (16) verbunden ist, von zwei in axialer Richtung verlaufende, um 90° um die Achse (13) des Stangenkörpers (14) versetzt angeordnete Öffnungen (42) durchdrungen wird und auf einem Endteil eines mit der zweiten Betätigungsstange (16) verbundenen Stücks (32) in axialer Richtung gleitend und durch einen Bolzen (46) montiert ist, der in eine Öffnung (38) eines mit dem Stangenkörper (14) verbundenen Stücks (37) eingeführt ist und an einem axialen Ende des Stücks (37) gegenüber dem Zwischenstück (40) herausragt.

8. Fernbedienungsstange nach Anspruch 7, dadurch gekennzeichnet, daß das Zwischenstück (40) in Anschlag gegen das mit dem Stangenkörper (14) verbundene Stück (37) durch eine Schraubenfeder (43) gehalten wird, die zwischen einem mit der zweiten Betätigungsstange (16) verbundenen Anschlag (39) und dem Zwischenstück (40) eingeführt ist.

9. Fernbedienungsstange nach mindestens einem der Ansprüche 6 bis 8, dadurch gekennzeichnet, daß die erste Betätigungsstange (15) ein Endteil (27) aufweist, das dem Endteil (47) der Stange gegenüberliegt, gegen die eine manuelle Einheit (35, 36) anschlägt, die gleitend in axialer Richtung auf einem mit dem Stangenkörper (14) verbundenen Stück (25) montiert ist, und
daß eine in axialer Richtung und zur Betätigungsorientierung der Schubeinheit (35, 36) entgegengesetzte Orientierung wirkende Rückholfeder (28) der ersten Betätigungsstange (15) zwischen dem ersten Endteil (27) der ersten Betätigungsstange (15) und einem Teil (29) des mit dem Stangenkörper (14) verbundenen Stücks (25) angeordnet ist.

## Claims

1. Remote-controlled intervention pole, for carrying out the dismantling and reassembly of a fixing socket for a removable endpiece of a nuclear fuel assembly, the socket being screwed inside a guide tube of the fuel assembly, the pole comprising a tubular pole body (14) and a first tubular control rod (15) mounted coaxially to be movable in axial translation inside the pole body (14), characterised in that it further comprises a second control rod (16) mounted coaxially inside the first control rod (15) and mounted to be rotationally movable about the axis (13) common to the pole body (14), the first control rod (15) and the second control rod (16), inside the first control rod (15), in that the pole body (14) comprises an end portion (47) constituting an endpiece having a cylindrical portion (48) the outer diameter of which is less than the inner diameter of the fixing socket of the removable endpiece and at least one projecting portion (56) adapted to engage in a cavity of the socket, in that a sleeve (51) comprising flexible fingers having lugs (52a, 52b) is mounted inside the endpiece (47), in such a way that the lugs (52a, 52b) are located opposite openings (50) passing through one wall of the cylindrical portion (48) of the endpiece (47), in that the second control rod (16) comprises a portion constituting an eccentric arranged in contact with the inner portion of the flexible fingers of the sleeve (51) and in that a pushing assembly (54, 53a, 53b) for pushing in an axial direction, capable of being manoeuvred by the first control rod (15), is mounted in the endpiece (47), so as to have a least one pushing rod (53a, 53b) capable of moving in an axial direction in the vicinity of the outer surface of the cylindrical portion (48) of the endpiece (47).

2. Intervention pole according to claim 1, characterised in that the pole body (14), the first control rod (15) and the second control rod (16) consist of successive sections in the axial direction (13) each comprising, at least at one end, means for attachment to another section.

3. Intervention pole according to claim 2, characterised in that the pole body (14) comprises at least two successive tubular sections made of a composite material consisting of a plastic and a reinforcing element and at least one mechanical connecting device (17, 18) comprising a member (17) integral with a first section having a threaded portion and a nut (18a) adapted to be screwed onto the threaded portion of the connection member (17) and mounted to be rotationally movable on a part (18b) integral with a second section of the pole body (14), with limited movement in the axial direction (13).

4. Intervention pole according to claim 3, characterised in that an annular rubber joint (19) is intercalated between the nut (18a) and the connecting member (17) comprising the threaded portion, to prevent the nut (18a) from becoming unscrewed after it has been screwed onto the threaded portion of the connecting member (17).

5. Intervention pole according to any one of claims 2, 3 and 4, characterised in that the sections of the first control rod (15) and the second control rod (16) comprise profiled portions (20a, 20b, 21a, 21b) of corresponding shape which can engage in one another to connect the sections, by relative displacement in a transverse direction perpendicular to the axis (13) of the first control rod (15) and the second control rod (16).

6. Intervention pole according to claim 1, characterised in that the second control rod (16) is integral in rotation, at the opposite end to the end forming the eccentric (16a), with an indexing assembly (40, 42, 46) for locating and fixing the position of orientation of the second control rod (16) about its axis (13), so as to be able to locate and fix a first position in which the eccentric (16a) enables the flexible fingers of the sleeve (51) and the lugs (52a, 52b) to be held in a fully retracted position inside the cylindrical portion (48) of the endpiece (47), and a second position of orientation of the second control rod (16) about its axis (13), wherein the eccentric (16a) effects withdrawal of the lugs (52a, 52b) of the flexible fingers of the sleeve (51), so that the end portion of the lugs (52a, 52b) projects relative to the outer surface of the cylindrical portion (48) of the endpiece (47).

7. Intervention pole according to claim 6, characterised in that the indexing assembly (40, 42, 46) of the second control rod (16) consists of a spacer (40) which is integral in rotation with the second control rod (16), pierced by two axially directed openings (42) arranged at 90° about the axis (13) of the pole body (14), and mounted so as to slide axially over an end portion of a part (32) integral with the second control rod (16) and by a stud (46) engaging in an opening (38) in a part (37) integral with the pole body (14) projecting at one axial end of the part (37) opposite the spacer (40).

8. Intervention pole according to claim 7, characterised in that the spacer (40) is held so as to abut on the part (37) integral with the pole body (14) by a helical spring (43) intercalated between a support member (39) integral with the second control rod (16) and the spacer (40).

9. Intervention pole according to any one of claims 6 to 8, characterised in that the first control rod (15) comprises an end portion (27) opposite the end portion (47) of the pole, on which a manual pushing assembly (35, 36) abuts, said assembly being slidably mounted in the axial direction on a part (25) integral with the pole body (14), and in that a return spring (28) for restoring the first control rod (15) in the axial direction and in a direction opposite to the direction of actuation of the pushing assembly (35, 36) is intercalated between the end portion (27) of the first control rod (15) and a portion (29) of the part (25) integral with the pole body (14).
